Europäisches Patentamt

European Patent Office

Office européen des brevets

(19)

(11) Veröffentlichungsnummer: **0 009 601**
B1

# EUROPÄISCHE PATENTSCHRIFT

(12)

(45) Veröffentlichungstag der Patentschrift:
02.09.81

(21) Anmeldenummer: **79103078.6**

(22) Anmeldetag: **22.08.79**

(51) Int. Cl.³: **B 60 G 17/04,** B 60 G 11/30

(54) Hydropneumatische Federung, insbesondere für Kraftfahrzeuge mit einer Ladepritsche.

(30) Priorität: 05.10.78 DE 2843436

(43) Veröffentlichungstag der Anmeldung:
16.04.80 Patentblatt 80/8

(45) Bekanntmachung des Hinweises auf die Patenterteilung:
02.09.81 Patentblatt 81/35

(84) Benannte Vertragsstaaten:
BE FR GB IT NL SE

(56) Entgegenhaltungen:
DE-A-2 004 510
DE-A-2 165 064
DE-B-1 291 641
DE-C-845 452
FR-A-579 572

(73) Patentinhaber: Boge GmbH, Bogestrasse 50,
D-5208 Eitorf/Sieg (DE)

(72) Erfinder: Leibeling, Heinz, Dipl.-Ing., Antoniusweg 9,
D-5200 Siegburg 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Hydropneumatische Federung, insbesondere für Kraftfahrzeuge mit einer Ladepritsche

Die Erfindung bezieht sich auf eine hydropneumatische Federung, insbesondere für Kraftfahrzeuge mit einer Ladepritsche, bestehend aus einem Dämpfungskräfte und Gasfederkräfte erzeugenden hydropneumatischen Federelement mit einem in einem ölgefüllten und durch ein Gaspolster belasteten Arbeitsraum verschieblichen Arbeitskolben, wobei der Druck des Gaspolsters eine veränderliche Traglast des Federelements bestimmt, und aus einem Zuschaltraum, aus dem zur Steigerung der Traglast Druckmittel — Öl oder Gas — in das Federelement gefördert wird.

Eine derartige Federung ist für ein Fahrzeug mit einer Ladepritsche geeignet, die zum Auf- und Absetzen einer Ladeeinheit, beispielsweise einer Wohneinheit für Campingzwecke eingerichtet ist, da bei diesen Fahrzeugen die durch die Ladeeinheit gegebene Zuladung meist im Verhältnis zum Eigengewicht des Fahrzeugs sehr groß ist und durch die genannte Steigerung der Traglast die Einfederung des Fahrzeugs beim Aufsetzen der Ladeeinheit verringert wird und die Federungseigenschaften im Hinblick auf eine komfortable Federung günstig beeinflußt werden können.

Bei der aus DE-OS 20 04 510 bekannten Federung der oben genannten Art weist ein selbstpumpendes und niveauregelndes Federelement eine Hochdruckkammer und eine Niederdruckkammer auf, wobei im abgeregelten Zustand in beiden Kammern gleicher Druck herrscht und eine dem Leerzustand des Fahrzeugs zugeordnete Traglast, die »Grundlast« durch den Druck der Niederdruckkammern bestimmt ist, wobei zur Steigerung der Grundlast durch Pumpeinrichtungen Druckmittel aus einem Zuschaltraum in die Niederdruckkammer gefördert wird. In der genannten Schrift ist angegeben, daß der Zuschaltraum als ein Zylinder mit einem mittels einer Schraubspindel vor- und zurückschiebbaren Kolben ausgebildet sein kann. Eine derartige Betätigung eines Kolbens ist in nachteiliger Weise aufwendig und umständlich.

Die Erfindung befaßt sich mit der Aufgabe, bei einer Federung der eingangs genannten Art die Förderung von Druckmittel aus einem Zuschaltraum mit einfachen Mitteln zu verwirklichen, wobei die Erfindung Federungen mit einer Hochdruckkammer und einer Niederdruckkammer und auch solche mit einer ausschließlichen Hochdruckkammer umfassen soll. Die gestellte Aufgabe wird dadurch gelöst, daß der Zuschaltraum als ein mit der Ladepritsche verbundener Hilfszylinder mit einem Hilfskolben ausgebildet ist, der mit Halterungen für eine Ladeeinheit versehen ist und beim Aufsetzen der Ladeeinheit selbsttätig aus einem ausgefahrenen Zustand in einen eingefahrenen Zustand verschoben wird.

Durch diese Maßnahmen wird in vorteilhafter Weise das Gewicht der Ladeeinheit zur Förderung von Druckmittel aus dem Zuschaltraum, d. h. dem Hilfszylinder in das Federelement eingesetzt und sind hierfür keine besonderen Betätigungsmittel erforderlich. Vorzugsweise wird der eingefahrene Zustand des Hilfskolbens durch ein Aufliegen der Ladeeinheit auf der Ladepritsche begrenzt. Beim Absetzen der Ladeeinheit strömt Druckmittel unter der Wirkung des Gaspolsters im Federelement zurück in den Hilfszylinder und wird der Hilfskolben wieder in den ausgefahrenen Zustand geschoben. So beeinflussen sich Federelemente und Hilfszylinder gegenseitig.

Die hydropneumatische Federung nach der Erfindung kann volltragend oder teiltragend gemeinsam mit einer anderen Federung für eine oder mehrere Achsen vorgesehen sein. Wenn die Ladeeinheit im wesentlichen von einer mit zwei Federelementen ausgerüsteten Achse getragen wird, steht im einfachsten Falle jedes Federelement mit einem Hilfszylinder in Verbindung. Es sind auch Gruppen von Federelementen und Hilfszylindern für eine oder mehrere Achsen denkbar, die sich gegenseitig beeinflussen, und ausschließlich ein Hilfszylinder kann mit einem oder mehreren Federelementen zusammengeschaltet sein.

Im folgenden wird die Erfindung anhand einer Ausführungsbeispiele dargestellten Zeichnung erläutert. Es zeigt

Fig. 1 eine Achse eines Fahrzeugs in Längsrichtung gesehen, wobei — wie links gezeichnet — eine Ladeeinheit von einer Ladepritsche abgesetzt und — wie rechts gezeichnet — eine Ladeeinheit auf die Ladepritsche aufgesetzt ist,

Fig. 2 eine Federung nach der Erfindung, bestehend aus einem hydropneumatischen Federelement einer Einrohrbauart und einem Hilfszylinder bei ausgefahrenem Hilfskolben,

Fig. 3 die Federung nach Fig. 2 bei eingefahrenem Hilfskolben,

Fig. 4 eine Federung nach der Erfindung, bestehend aus einem hydropneumatischen selbstpumpenden Federelement einer Zweirohrbauart und einem Hilfszylinder bei ausgefahrenem Hilfskolben.

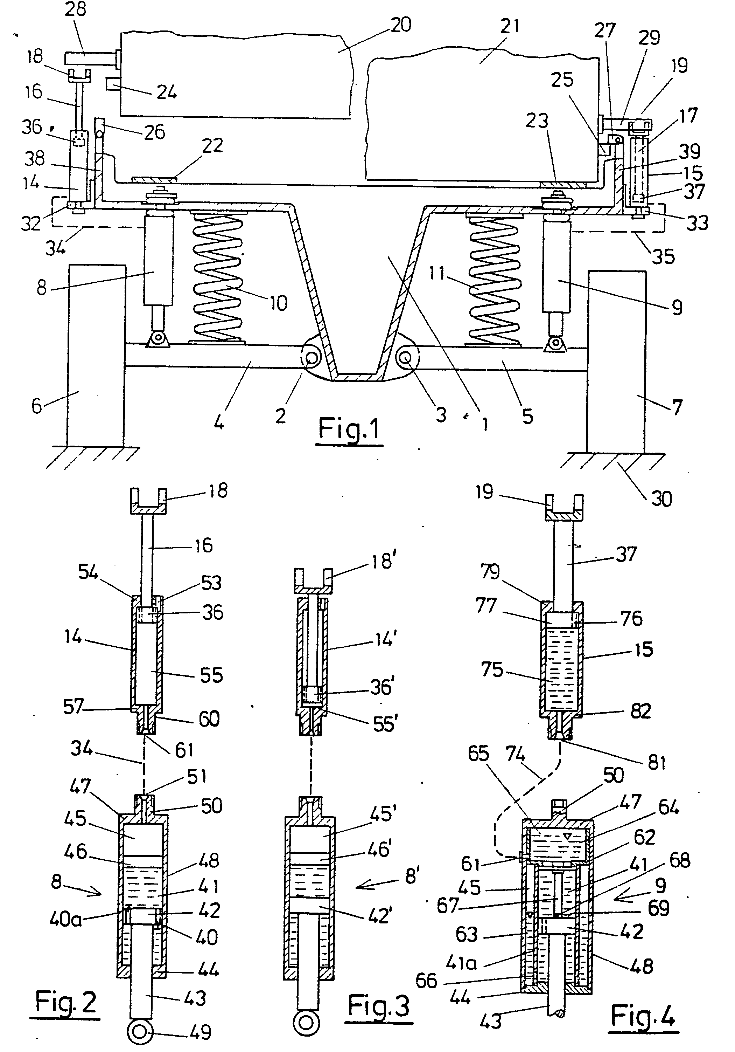

Bei dem Fahrzeug nach Fig. 1 mit einer Ladepritsche 1 sind spiegelsymmetrisch in Gelenkpunkten 2 und 3 Schwingachsen 4 und 5 aufgehängt, die an ihren Enden auf einer Fahrbahn 30 stehende Fahrzeugräder 6 und 7 tragen. Die Ladepritsche 1 ist durch spiegelbildlich angeordnete, teiltragende hydropneumatische Federelemente 8 und 9 gemeinsam mit Schraubenfedern 10 und 11 gegenüber den Fahrzeugrädern 6 und 7 abgefedert, wobei an der Ladepritsche 1 und an den Schwingachsen 4 und 5 bekannte Anschlußelemente für die Federelemente 8 und 9 vorgesehen sind. Die Ladepritsche 1 weist Ladeplatten 22 und 23 und mit nach außen weisenden Flanschen 32 und 33 versehene Seitenteile 38 und 39 auf. An dem linken Flansch 32 ist ein senkrecht nach oben stehender linker Hilfszylinder 14 befestigt, an dem rechten Flansch 33 ein senkrecht nach oben stehender rechter Hilfszylinder 15. Der linke Hilfszylinder 14 ist durch eine Leitung 34 mit dem linken Federelement 8 verbunden, der rechte Hilfszylinder 15 durch eine Leitung 35 mit dem rechten Federelement 9.

Ein in dem linken Hilfszylinder 14 verschieblichen Hilfskolben 36 ist am inneren Ende einer aus dem Hilfszylinder 14 tretenden Hilfskolbenstange 16 befestigt und befindet sich unter der Wirkung eines Überdrucks im Hilfszylinder 14 in ganz ausgefahrener Stellung. Das austretende Ende der Hilfskolbenstange 16 weist eine Gabel 18 auf. Eine mit einem seitlich vorstehenden Bolzen 28 und einem Vorsprung 24 versehene Ladeeinheit 20 ist durch ein nicht gezeichnetes Hebezeug in einer Schweblage gehalten, bei der der Bolzen 28 der Gabel 18 einrastbereit gegenübersteht. Das Seitenteil 38 ist mit einem dem Vorsprung 24 zugeordneten senkrecht stehenden, beweglichen Riegel 26 ausgerüstet. Das Fahrzeugrad 6 ist durch das anteilige Eigengewicht der Ladepritsche 1 belastet.

Ein in dem rechten Hilfszylinder 15 verschieblicher Hilfskolben 37 ist am inneren Ende einer Hilfskolbenstange 17 befestigt, deren aus dem Hilfszylinder 15 tretendes Ende eine Gabel 19 aufweist. Eine mit einem seitlich vorstehenden Bolzen 29 und einem Vorsprung 25 versehene Ladeeinheit 21 ruht frei von einem Hebezeug auf der Ladeplatte 23, wobei der Bolzen 29 in der Gabel 19 eingerastet ist und der Hilfskolben 37 sich unter der Wirkung des Gewichts der Ladeeinheit 21 in einer eingefahrenen Stellung befindet. Das Seitenteil 39 ist mit einem in die Waagerechte umgelegten Riegel 27 ausgerüstet, der den Vorsprung 25 verriegelt und die Ladeeinheit 21 fest auf der Ladeplatte 23 und somit auf der Ladepritsche 1 hält.

Werden die Ladeeinheit 20 und die Ladeeinheit 21 als eine Ladeeinheit 20/21 betrachtet, so ist auf der linken Seite der Fig. 1 die Ladeeinheit 20/21 von der Ladepritsche 1 abgesetzt und auf der rechten Seite auf die Ladepritsche 1 aufgesetzt. Dabei ist zweckmäßig die Anordnung so getroffen, daß der Schwerpunkt der Ladeeinheit 20/21 etwa mit der Lage der Bolzen 28 und 29 übereinstimmt. Die Federelemente 8 und 9 und die Hilfszylinder 14 und 15 beeinflussen sich gegenseitig, indem beim Aufsetzen der Ladeeinheit 20/21 Druckmittel aus den Hilfszylindern 14 und 15 in die Federelemente 8 und 9 gefördert wird und beim Absetzen Druckmittel aus den Federelementen 8 und 9 in die Hilfszylinder 14 und 15 zurückströmt, wobei im einzelnen auf die Erläuterungen der Fig. 2 bis 4 verwiesen wird.

Bei der Federung nach Fig. 2 weist ein Federelement 8 einen ölgefüllten Arbeitsraum 41, einen in demselben verschieblichen, mit Dämpfungsventilen 40 und 40a für beide Strömungsrichtungen versehenen Arbeitskolben 42 am inneren Ende einer Kolbenstange 43, die aus einem den Arbeitsraum 41 dicht abschließenden Deckel 44 nach außen tritt, einen den Arbeitsraum begrenzenden verschieblichen Trennkolben 46 und auf dessen anderer Seite einen ein Gaspolster von hohem Druck aufnehmenden Gasraum 45 auf, wobei der Arbeitsraum 41 und der Gasraum 45 in einem gemeinsamen durch einen Boden 47 abgeschlossenen Zylinder 48 gebildet sind.

Die Kolbenstange 43 ist an ihrem freien Ende mit einer Befestigungsöse 49 versehen, die mit einer Radaufhängung, beispielsweise mit der Schwingachse 4 nach Fig. 1 verbindbar sei. Der Boden 47 ist mit einem hohlen Befestigungsstift 50 versehen, der in einem Leitungsanschluß 51 endet und mit einem Fahrzeugaufbau, beispielsweise mit der Ladepritsche 1 nach Fig. 1 verbindbar sei. Ein Hilfszylinder 14 weist einen Gasraum 55, einen in dem Hilfszylinder 14 verschieblichen dichten Hilfskolben 36 am inneren Ende einer Hilfskolbenstange 16, die aus einem mit einer Entlüftungsöffnung 53 versehenen Deckel 54 des Hilfszylinders 14 austritt, und einen den Gasraum 55 abschließenden Boden 57 auf. Die Hilfskolbenstange 16 ist an ihrem freien Ende mit einer Gabel 18 versehen, die als Halterung für eine Ladeeinheit, beispielsweise für den Bolzen 28 der Ladeeinheit 20 nach Fig. 1 dienen möge. Der Boden 57 ist mit einem hohlen Befestigungsstift 60 versehen, der in einem Leitungsanschluß 61 endet und zur Befestigung an einer Ladepritsche, beispielsweise an dem Flansch 32 der Ladepritsche 1 nach Fig. 1 dienen möge. Die Leitungsanschlüsse 51 und 61 sind durch eine gestrichelt angedeutete Leitung 34 miteinander verbunden.

Bei der Federung nach Fig. 3 sind das Federelement 8' und der Hilfszylinder 14' dieselben Teile wie das Federelement 8 und der Hilfszylinder 14 nach Fig. 2. Jedoch befindet sich der Hilfskolben 36' in einer nahezu ganz eingefahrenen Stellung, wobei die Gabel 18', der Arbeitskolben 42' und der Trennkolben 46' eine veränderte Stellung gegenüber der Gabel 18, dem Arbeitskolben 42 und dem Trennkolben 46 nach Fig. 2 und die Gasräume 45' und 55' eine veränderte Größe gegenüber den Gasräumen 45 und 55 haben.

Es sei angenommen, daß die Federelemente 8, 8' und die Hilfszylinder 14, 14' nach den Fig. 2 und 3 in dem Fahrzeug nach Fig. 1 analog der dort gezeichneten Weise eingebaut seien und Fig. 2 den Zustand der Federung bei abgesetzter Ladeeinheit 20 und Fig. 3 den Zustand bei aufgesetzter Ladeeinheit 20 darstellen, wobei die Stellung des Arbeitskolbens 36 dem statischen Gleichgewicht von anteiligem Gewicht der Ladepritsche 1 einerseits und Gasfederkraft des Federelements 8 plus Federkraft der Schraubenfeder 10 andererseits und die Stellung des Arbeitskolbens 36' dem statischen Gleichgewicht von anteiligem Gewicht der Ladepritsche 1 plus anteiligem Gewicht der Ladeeinheit 20 einerseits und Gasfederkraft des Federelements 8' plus Federkraft der Schraubenfeder 10 andererseits entsprechen mögen. Die Gasmenge im Gasraum 45' bei eingefahrenem Hilfskolben 36' ist um die Differenz der Gasmengen in den Gasräumen 55 und 55' größer als die Gasmenge im Gasraum 45 bei ausgefahrenem Hilfskolben 36, was eine Steigerung des Drucks im Gasraum 45' gegenüber dem im Gasraum 45 entsprechend den Gasgesetzen zur Folge hat. Der Gasraum 45' ist etwas kleiner als der Gasraum 45, da sich der Trennkolben 46' gegenüber dem Trennkolben 46 so weit in Richtung auf den Boden 47 verschoben hat, wie dem weiter eingeschobenen Zustand der Kolbenstange 43' entspricht. Dabei ist angenommen, daß die oben angegebene, von der größeren Gasmenge herrührende Steigerung des Druckes im Gasraum 45' nicht ausgereicht hat, um das anteilige Gewicht der Ladeeinheit 20 zu tragen und eine Einfederung der Schwingachse 4 mit entsprechenden Einfederungen und Steigerungen der Tragkräfte des Federelements 8' und der Schraubenfeder 10 erfolgt ist.

Die in den Gasräumen 45 und 45' enthaltenen unterschiedlichen Gasmengen sind ausschließlich für das dynamische Federungsverhalten der Federelemente 8 bzw. 8' maßgebend, wenn der Drosselwiderstand der Leitung 34 oder besonderer in der Leitung 34 vorgesehener Einrichtungen so groß ist, daß die Gasräume 55 und 55' nicht an den dynamischen Druckschwankungen der Gasräume 45 und 45' bei den Schwingbewegungen der Arbeitskolben 42 und 42' teilhaben. Die Leitung 34 kann auch drosselfrei oder mit Drosseleinrichtungen ausgerüstet sein, wobei die Gasräume 55 und 55' den dynamischen Druckschwankungen der Gasräume 45 und 45' exakt oder verzögert folgen können. Dann können die Gasräume 55 und 55' im ersten Fall ausschließlich den Verlauf der dynamischen Gasfederkräfte der Federelemente 8 und 8' in einem gewollten Sinne beeinflussen und im zweiten Fall zusätzlich pneumatische Dämpfungskräfte aufbauen.

Die wirksamen Kolbenflächen des Hilfskolbens ist zweckmäßig so auszulegen, daß die aus dem Druck des Gasraums 55 resultierende Ausschubkraft des eingefahrenen Hilfskolbens 36 etwa gleich, besser etwas kleiner ist als das anteilige Gewicht der Ladeeinheit 20, und der Hub des Hilfskolbens 36 vom ausgefahrenen bis zum eingefahrenen Zustand ist so auszulegen, daß eine gewollte, durch das Hubvolumen des Hilfskolbens 36 bestimmte Steigerung der Gasfederkraft des Federelements 8 erreicht wird. Dabei bewegen sich — entsprechend durchgerechneten Beispielen, bei denen das anteilige Gewicht der Ladeeinheit 20 etwa gleich dem anteiligen Gewicht der Ladepritsche 1 ist — die Fläche des Hilfskolbens 36 in der Größenordnung der Fläche der Kolbenstange 43 und der Hub des Hilfskolbens 36 in der Größenordnung von 30 cm. Es bedeutet keinen besonderen Aufwand für die Verwirklichung der erfindungsgemäßen Federung, wenn die Ladeeinheit 20 durch ein auf jeden Fall erforderliches Hebezeug um etwa 30 cm über die Ebene der Ladepritsche 1 bis zum Einrasten des Bolzens 28 in die Gabel 18 gehoben werden muß.

Bei der Federung nach Fig. 4 weist ein Federelement 9 einen einen ölgefüllten Arbeitsraum 41 bildenden Arbeitszylinder 41a, einen in demselben verschieblichen, mit nicht gezeichneten Dämpfungsventilen versehenen Arbeitskolben 42 am inneren Ende einer Kolbenstange 43, die aus einem den Arbeitszylinder 41 dicht abschließenden Deckel 44 nach außen tritt, eine den Arbeitsraum 41 auf der dem Deckel 44 abgewandten Seite begrenzende Zwischenwand 62, eine den Arbeitszylinder 41a ringförmig umgebende durch den Deckel 44 und die Zwischenwand 62 begrenzte, zum Teil mit Öl und zum Teil mit Gas gefüllte Hochdruckkammer 63 und auf der anderen Seite der Zwischenwand 62 eine durch einen Boden 47 begrenzte, zum Teil mit Öl und zum Teil mit Gas gefüllte Niederdruckkammer 64 auf, wobei die genannten Teile in einem durch den Deckel 44 und den mit einem Befestigungsstift 50 versehenen Boden 47 abgeschlossenen Außenrohr 48 eingebaut sind. Die Hochdruckkammer 63 enthält einen Gasraum 45 und steht ölseitig mit dem Arbeitsraum 41 über eine Öffnung 66 in offener Verbindung. Die Niederdruckkammer 64 enthält einen Gasraum 65 und steht ölseitig mit dem Arbeitsraum 41 über eine an der Zwischenwand 62 befestigte hohle Pumpenstange 67 und die hohl ausgebildete Kolbenstange 43 in einer beispielsweise aus der DE-OS 20 04 510 bekannten, selbstpumpenden und niveauregelnden Weise in Verbindung, wobei aus der Niederdruckkammer 64 ein am freien Ende der Pumpenstange 67 angeordnetes, nicht gezeichnetes Einlaßventil in die Kolbenstange 43 und aus dieser ein nicht gezeichnetes Auslaßventil in den Arbeitsraum 41 führen und in der Pumpenstange 67 eine aus dem Arbeitsraum 41 in die Niederdruckkammer 64 führende Regelöffnung 68 vorgesehen ist, die bei Hubbewegungen des Arbeitskolbens 42 im gezeichneten Niveaubereich abwechselnd von einer Steuerkante 69 des Arbeitskolbens 42 freigegeben oder geschlossen wird. In dem gezeichneten, bei frei gegebener Regelöffnung 68 abgeregelten Zustand des Federeleents 9 herrscht in der Hochdruckkammer 63 und der Niederdruckkammer 64 gleicher Druck.

Ein Hilfszylinder 15 weist einen Ölraum 75, einen in dem Hilfszylinder 15 verschieblichen, mit einer durchgehenden Öffnung 76 versehenen Führungskolben 77 am Ende eines Hilfskolbens 37, der abgedichtet und mit einer Gabel 19 versehen aus einem Deckel 79 des Hilfszylinders 15 austritt und einen mit einem Leitungsanschluß 81 versehenen, den Ölraum 75 begrenzenden Bodens 82 auf.

Die Niederdruckkammer 64 ist im Bereich der Zwischenwand 62 mit einem Leitungsanschluß 61 versehen, von dem eine Leitung 74 zu dem Leitungsanschluß 81 führt. Bei einem Einfahren des Hilfskolbens 37 unter dem Gewicht einer Ladeeinheit strömt Öl aus dem Hilfszylinder 15 in die Niederdruckkammer 64, und beim Absetzen der Ladeeinheit strömt Öl aus der Niederdruckkammer 64 in den Hilfszylinder 15 zurück und fährt der Hilfskolben 37 wieder aus.

Beim Einfahren des Hilfskolbens 37 wird die in den Gasräumen 65 und 45 enthaltende Gasmenge auf ein kleineres Gesamtvolumen zusammengepreßt, wobei das verdrängte Öl durch die Regelöffnung 68 oder durch das genannte Einlaßventil der Pumpenstange 67 und das Auslaßventil der Kolbenstange 43 aus der Niederdruckkammer 64 in den Arbeitsraum 41 und von dort weiter durch die Öffnung 66 in die Hochdruckkammer 63 strömt, bis zum Druckausgleich mit der Niederdruckkammer 64. Dadurch wird die im abgeregelten Zustand des Federelements 9 vorhandene Gasfederkraft erhöht. Zusätzlich kann die Gasfederkraft des Federelements 9 im aufgeregelten Zustand in einer beispielsweise aus der DE-OS 20 04 510 bekannten Weise erheblich gesteigert werden. Es liegt auf der Hand, dabei einer Federung nach Fig. 4 mit einem selbstpumpenden Federelement 9 das anteilige Gewicht einer Ladeeinheit erheblich höher, beispielsweise drei bis viermal höher als das anteilige Gewicht der Ladepritsche sein und dennoch bei aufgesetzter Ladeeinheit das gezeichnete Regelniveau nach Fig. 4 erreicht werden kann.

## Patentansprüche

1. Hydropneumatische Federung, insbesondere für Kraftfahrzeuge mit einer Ladepritsche (1), bestehend aus einem Gasfederkräfte und Dämpfungskräfte erzeugenden hydropneumatischen Federelement (8, 8', 9) mit einem in einem ölgefüllten und durch ein Gaspolster belasteten Arbeitsraum (41) verschieblichen Arbeitskolben (42, 42'), wobei der Druck des Gaspolsters eine veränderliche Traglast des Federelements (8, 8', 9) bestimmt, und aus einem Zuschaltraum, aus dem zur Steigerung der Traglast Druckmittel — Öl oder Gas — in das Federelement (8, 8', 9) gefördert wird, dadurch gekennzeichnet, daß der Zuschaltraum als ein mit der Ladepritsche (1) verbundener Hilfszylinder (14, 15) mit einem Hilfskolben (36, 37) ausgebildet ist, der mit Halterungen (Gabel 18, 19) für eine Ladeeinheit (20, 21) versehen ist und beim Aufsetzen der Ladeeinheit selbsttätig aus einem ausgefahrenen Zustand des Hilfskolbens (36) in einen eingefahrenen Zustand des Hilfskolbens (36') verschoben wird.

2. Federung nach Anspruch 1, dadurch gekennzeichnet, daß der eingefahrene Zustand des Hilfskolbens (37) durch ein Aufliegen der Ladeeinheit (21) auf einer Ladeplatte (23) der Ladepritsche (1) begrenzt ist.

3. Federung nach den Ansprüchen 1 und 2, dadurch gekennzeichnet, daß ein Hilfszylinder als Zuschaltraum für mehrere Federelemente ausgebildet ist.

4. Federung nach den Ansprüchen 1 und 2, dadurch gekennzeichnet, daß Gruppen von Hilfszylindern als Zuschaltraum für eine oder mehre ...derelemente ausgebildet sind.

## Claims

1. A hydropneumatic spring suspension, especially for automotive vehicles with a load bed (1), comprising a hydropneumatic spring element (8, 8', 9) that produces gaseous elastic forces and damping forces with a work piston (42, 42') slidable in an oil-filled work chamber (41) that is loaded by a gas cushion whereby the pressure of the gas cushion determines a variable bearing force of the spring element (8, 8' 9), and a shunt chamber from which a pressure medium is supplied to the spring element (8, 8', 9) to increase the bearing force of the spring element (8, 8', 9), characterized in that the shunt chamber is formed as an auxiliary cylinder (14, 15) connected with the load bed (1) and containing an auxiliary piston (36, 37) which is provided with receiving devices (fork 18, 19) for a load unit (20, 21), and that whwn the load unit (20, 21) is positioned on the load bed (1) the auxiliary piston (36, 37) is automatically forced from an extended position of the auxiliary piston (36) into a retracted position of the auxiliary piston (36').

2. A spring suspension as claimed in Claim 1, characterized in that the retracted position of the auxiliary piston (37) is determined by supporting engagement of the load unit (21) with a load plate (23) of the load bed (1).

3. A spring suspension as claimed in Claims 1 and 2, characterized in that one auxiliary cylinder is constructed as shunt chamber for several spring elements.

4. A spring suspension as claimed in Claims 1 and 2, characterized in that groups of auxiliary cylinders are constructed as shunt chamber for or more spring elements.

## Revendications

1. Ensemble amortisseur hydropneumatique, en pariculier pour véhicules à plateau de chargement (1), comportant un amortisseur hydropneumatique (8, 8', 9) qui crée des forces élastiques par compression de gaz et de forces d'amortissement et qui comprend un piston de travail (42, 42'), qui peut coulisser dans une chambre de travail (41) remplie d'huile et contrainte par un matelas de gaz, où la pression du matelas de gaz définit une capacité variable de reprise de charge de l'amortisseur (8, 8', 9); et comportant également une chambre de raccordement d'où le fluide sous pression — huile ou gaz — arrive dans l'amortisseur (8, 8', 9) pour accroître la capacité de reprise de charge, caractérisé en ce que, la chambre de raccordement est conçue sous forme d'un cylindre auxiliaire (14, 15) relié au plateau de chargement (1) et comportant un piston auxiliaire (36, 37) muni de supports (fourchette 18, 19) pour une unité de chargement (20, 21) et qui, lors de la pose de l'unité de chargement coulisse automatiquement pour passer d'un état en extension du piston auxiliaire (36) à un état en rétraction du piston auxiliaire (36').

2. Ensemble amortisseur selon la revendication 1, caractérisé en ce que, l'état en rétraction du piston auxiliaire (37) est limité par le fait que l'unité de chargement (21) repose sur une plaque de chargement (23) du plateau de chargement (1).

3. Ensemble amortisseur selon les revendications 1 et 2, caractérisé en ce qu'un cylindre auxiliaire est prévu comme chambre de raccordement pour plusieurs amortisseurs.

4. Ensemble amortisseur selon les revendications 1 et 2, caractérisé en ce que des groupes de cylindres auxiliaires sont prévus comme chambre de raccordement pour un ou plusieurs amortisseurs.

0 009 601

Fig.1

Fig. 2

Fig.3

Fig.4